(19) Europäisches Patentamt
European Patent Office
Office européen des brevets

(11) **EP 4 704 324 A1**

(12) **EUROPÄISCHE PATENTANMELDUNG**

(43) Veröffentlichungstag:
**04.03.2026  Patentblatt 2026/10**

(21) Anmeldenummer: **25192311.6**

(22) Anmeldetag: **29.07.2025**

(51) Internationale Patentklassifikation (IPC):
**H02P 5/74** (2006.01)    **H02P 6/04** (2016.01)

(52) Gemeinsame Patentklassifikation (CPC):
**H02P 5/74; H02P 6/04**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **28.08.2024  LU 103364**

(71) Anmelder: **Miele & Cie. KG**
**33332 Gütersloh (DE)**

(72) Erfinder:
• **Bicker, Rainer**
  **33415 Verl (DE)**
• **Gessat, Ulrich**
  **33378 Rheda-Wiedenbrück (DE)**
• **Balzer, Eugen**
  **33729 Bielefeld (DE)**

(54) **ANTRIEBSSYSTEM**

(57) Die Erfindung betrifft ein Antriebssystem mit einem dreiphasigen Motor (M1), mit einem einphasigen Motor (M2) und mit einer Ansteuerungsschaltung

mit drei Halbbrücken (H1-H3), welche ausgebildet und eingerichtet sind, den dreiphasigen Motor (M1) anzusteuern,

mit drei Messwiderständen (R1-R3), vorzugsweise Shunts (R1-R3), welche ausgebildet und eingerichtet sind, die Ströme der drei Halbbrücken (H1-H3) zu erfassen,

mit einer vierten Halbbrücke (H4), welche ausgebildet und eingerichtet sind, den einphasigen Motor (M2) anzusteuern,

mit einem vierten Messwiderstand (R4), vorzugsweise Shunt (R4), welcher ausgebildet und eingerichtet sind, den Strom der vierten Halbbrücke (H4) zu erfassen,

wobei eine der drei Halbbrücken (H1-H3) zum Ansteuern des dreiphasigen Motors (M1) ferner zum Ansteuern des einphasigen Motors (M2) ausgebildet und eingerichtet ist, und

mit einer Steuerungseinheit (S), welche ausgebildet und eingerichtet ist, die vier Halbbrücken (H1-H4) zu betreiben.

FIG. 2

EP 4 704 324 A1

**Beschreibung**

Die Erfindung betrifft ein Antriebssystem sowie ein Haushaltsgerät mit einem derartigen Antriebssystem.

Zu den elektrischen Motoren gehören die Synchronmotoren, welche einphasig mit Wechselstrom oder mehrphasig mit Drehstrom betrieben werden können. In jedem Fall wird ein konstant magnetisierter Läufer verwendet, welcher auch als Rotor bezeichnet werden kann. Hierzu können Permanentmagnete oder eine elektromagnetische Fremderregung verwendet werden. Die Bezeichnung Synchronmotor resultiert daraus, dass der Rotor von einem bewegten magnetischen Drehfeld im Ständer, auch Stator genannt, synchron mitgenommen wird. Somit weist der Synchronmotor im Betrieb eine zur Wechselspannung synchrone Bewegung auf, deren Drehzahl über die Polpaarzahl des Stators des Synchronmotors mit der Frequenz der Wechselspannung verknüpft ist.

Mehrsträngige Permanentmagnet-Synchronmotoren werden üblicherweise über einen Frequenzumrichter betrieben, wodurch ein geregelter Betrieb ermöglicht wird, indem Drehrichtung, Drehzahl und Drehmoment des Synchronmotors über die Frequenz und die Amplitude der Ausgangswechselspannung des Frequenzumrichters vorgegeben werden. Dies kann das Drehverhalten des Synchronmotors z.B. beim Anlauf sowie in Abhängigkeit der anzutreibenden Last gezielt beeinflussen.

Nachteilig ist hierbei, dass derartige Frequenzumrichter zusätzliche Kosten verursachen und zusätzlichen Bauraum benötigen können. Neben dem Frequenzumrichter selbst können diese Kosten durch weitere Elektronik im Antriebssystem entstehen. Gerade diese Kosten sind bei verschiedenen einfachen Anwendungen wie z.B. bei einfachen Pumpen wie z.B. bei Laugenpumpen in Waschmaschinen höchst unerwünscht, weil die durch den Frequenzumrichter geschaffenen Möglichkeiten der Regelung bzw. der Steuerung des Synchronmotors für diese Anwendungen gar nicht benötigt werden und sich somit die Mehrkosten des Frequenzumrichters nicht rentieren. Zu derartigen einfachen Anwendungen wie z.B. bei Laugenpumpen in Waschmaschinen gehören das Abpumpen der Lauge aus dem Waschraum oder das Umfluten. In beiden Fällen ist ein geregelter Betrieb des jeweiligen Pumpenmotors nicht erforderlich.

Als kostengünstige Alternative zu mittels Frequenzumrichtern betriebenen Synchronmotoren ist es bei einfachen Anwendungen wie z.B. bei Laugenpumpen in Waschmaschinen bekannt, ungeregelte Einphasen-Synchronmotoren als Antriebe z.B. von Laugenpumpen einzusetzen. Hierbei werden üblicherweise permanenterregte Einphasen-Synchronmotoren eingesetzt, so dass auf einen elektrischen Kontakt vom Stator zum Rotor mittels Schleifringen oder Bürsten verzichtet werden kann.

Wie bereits allgemein erwähnt ist es auch bei permanenterregten Einphasen-Synchronmotoren vorteilhaft, dass diese im Betrieb eine zur Wechselspannung synchrone Bewegung ausführen, deren Drehzahl über die Polpaarzahl des Stators mit der Frequenz der Wechselspannung verknüpft ist. Somit ist der Betrieb eines permanenterregten Einphasen-Synchronmotors mit der Frequenz der Wechselspannung des Netzes sehr einfach möglich und es kann auf kostenintensive Steuerungen sowie Frequenzumrichter verzichtet werden. Vielmehr ist eine einfache Ansteuerung des Einphasen-Synchronmotors über eine H-Brücke ausreichend, welche von einer Steuerungseinheit betrieben werden kann. Dies kommt insbesondere einfachen Anwendungen ungeregelt mit konstanter Drehzahl wie z.B. bei Laugenpumpen in Waschmaschinen zugute.

Werden in einem Gerät mehrere derartige Einphasen-Synchronmotoren verwendet, beispielsweise in einer Waschmaschine ein erster Einphasen-Synchronmotor für die Umflutpumpe und ein zweiter Einphasen-Synchronmotor für die Laugenpumpe, so ist auch jeweils eine H-Brücke und eine Steuerungseinheit pro Einphasen-Synchronmotor erforderlich. Dies gilt entsprechend für andere Motoren und insbesondere für Synchronmotoren mit zwei Phasen oder drei Phasen bzw. Kombinationen hiervon, d.h. beispielsweise in einem Gerät mit einem Einphasen-Synchronmotor und einem Dreiphasen-Synchronmotor, welche jeweils eine eigene Drehstrombrücke und Steuerungseinheit benötigen, um gleichzeitig, d.h. parallel zueinander, betrieben werden zu können.

Nachteilig ist hieran, dass in jedem Fall die zusätzlichen Drehstrombrücken die Herstellungskosten hinsichtlich Material und Montageaufwand, den Platzbedarf im Gerät bzw. auf der Elektronik, den Stromverbrauch und bzw. oder die erzeugte Abwärme entsprechend erhöhen können.

Mit anderen Worten verfügen technische Produkte oft über mehrere Motoren, die von einer Elektronik angesteuert werden. Im einfachsten Fall werden die Motoren ein- und ausgeschaltet. Durch steigende Ansprüche beim Energiebedarf und beim Komfort der Produkte wird mehr und mehr dazu übergegangen, Motoren elektronisch anzusteuern.

So werden mehr und mehr dreiphasig anzusteuernde Motoren für Antriebe eingesetzt, die über eine große Zeitspanne des Gerätebetriebs arbeiten wie z.B. den Antrieb der Trommel der Waschmaschine, den Antrieb der Geschirrspüler-Umwälzpumpe, den Antrieb von Trommel und Gebläse im Wäschetrockner, den Antrieb von Kompressoren für Wärmepumpen, u.a. im Wäschetrockner, sowie den Antrieb von Staubsaugergebläsen.

Daneben gibt es in den technischen Geräten auch Motoren, die eine geringere Betriebszeit und bzw. oder eine geringere Antriebsleistung haben. Diese sind für das Abpumpen von Wasser, Positionieren von Wasserwegen, mechanisches Bearbeiten von Böden wie z.B. die Bürstenwalze beim Staubsauger zuständig. Diese Motoren werden der Einfachheit halber oftmals nur ein- und ausgeschaltet und haben eine konstante Drehzahl. Eine Steuerung bzw. eine Regelung der Drehzahl wäre zwar vorteilhaft, entfällt aber oft aus Kostengründen.

Um in derartigen technischen Geräten den kleinen Motor betreiben zu können, muss die maximale zur Verfügung stehende Spannung für den großen Motor sehr deutlich reduziert werden. Eine Aufschaltung der dritten Harmonischen der Ansteuerfrequenz auf alle Phasen, die üblicherweise zur vollen Ausnutzung der Zwischenkreisspannung und damit Leistungssteigerung vorgenommen wird, muss entfallen und die Spannung des kleineren Motors inkl. Spannungsabfall am Koppelkondensator verringert die für den Hauptmotor zur Verfügung stehende Spannung entsprechend. Der Verlust an zur Verfügung stehender Spannung muss durch eine entsprechend höhere Stromaufnahme kompensiert werden. Dafür sind höhere Leitungsquerschnitte und Halbleiter mit höherer Strombelastbarkeit notwendig.

Ein weiterer Nachteil ist, dass der Koppelkondensator für den kleinen Motor ein notwendiges Bauelement ist, das die Kosten erhöht.

Der Erfindung stellt sich somit das Problem, ein Antriebssystem der eingangs beschriebenen Art bereitzustellen, welches einen dreiphasigen Motor und einen einphasigen Motor unabhängig voneinander mit einem geringeren elektronischen bzw. schaltungstechnischen Aufwand als bisher bekannt betreiben kann. Insbesondere sollen die Bauteile der Ansteuerungsschaltung des dreiphasigen Motors mit möglichst geringem bzw. mit geringstem Aufwand zusätzlich zum Ansteuern eines weiteren kleineren einphasigen Motors verwendet werden können. In jedem Fall soll vorzugsweise die Drehzahl eines kleineren einphasigen Motors eingestellt werden können. In jedem Fall soll vorzugsweise die Stromaufnahme und bzw. oder die Phasenverschiebung eines kleineren einphasigen Motors für eine optimierte Ansteuerung mittels der Ansteuerungsschaltung erfasst werden können. Dies soll insbesondere kostengünstiger, bauraumsparender, energiesparender und bzw. oder mit einer geringeren Abwärme erfolgen können. Zumindest soll eine Alternative zu bekannten derartigen Antriebssystemen geschaffen werden.

Erfindungsgemäß wird dieses Problem durch ein Antriebssystem sowie durch ein Haushaltsgerät mit den Merkmalen der unabhängigen Ansprüche gelöst. Vorteilhafte Ausgestaltungen und Weiterbildungen der Erfindung ergeben sich aus den nachfolgenden Unteransprüchen.

Somit betrifft die vorliegende Erfindung ein Antriebssystem mit einem dreiphasigen Motor, mit einem einphasigen Motor und mit einer Ansteuerungsschaltung

mit drei Halbbrücken, welche ausgebildet und eingerichtet sind, den dreiphasigen Motor anzusteuern,

mit drei Messwiderständen, vorzugsweise Shunts, welche ausgebildet und eingerichtet sind, die Ströme der drei Halbbrücken zu erfassen,

mit einer vierten Halbbrücke, welche ausgebildet und eingerichtet sind, den einphasigen Motor anzusteuern,

mit einem vierten Messwiderstand, vorzugsweise Shunt, welcher ausgebildet und eingerichtet sind, den Strom der vierten Halbbrücke zu erfassen,

wobei eine der drei Halbbrücken zum Ansteuern des dreiphasigen Motors ferner zum Ansteuern des einphasigen Motors ausgebildet und eingerichtet ist, und

mit einer Steuerungseinheit, welche ausgebildet und eingerichtet ist, die vier Halbbrücken zu betreiben.

Im Unterschied zum Stand der Technik kann somit auf eine weitere Halbbrücke verzichtet und dafür eine der Halbbrücken des dreiphasigen Motors zum Betreiben beider Motoren gleichzeitig genutzt werden. Dies kann den Aufwand bzw. die Kosten entsprechend reduzieren. Dies kann auch Gewicht und Bauraum sparen sowie den Energieverbrauch senken.

Gemäß einem Aspekt der Erfindung ist die Ansteuerungsschaltung ausgebildet und eingerichtet, auf die drei Phasen des dreiphasigen Motors die halbe Amplitude der Spannung des einphasigen Motors aufzuaddieren. Dies kann die Ausgangsspannungen der drei Halbbrücken entsprechend erhöhen, um den einphasigen Motor zusätzlich betreiben zu können, ohne den Betrieb des dreiphasigen Motors einzuschränken.

Gemäß einem weiteren Aspekt der Erfindung ist die Ansteuerungsschaltung ausgebildet und eingerichtet, die vierte Halbbrücke derart zu betreiben, so dass die Ausgangsspannung der vierten Halbbrücke der Ausgangsspannung derjenigen der drei Halbbrücken entspricht, welche zusätzlich den einphasigen Motor ansteuert, abzüglich der halben Spannung des einphasigen Motors. Hierdurch kann die Motorspannung des einphasigen Motors auf einfache Art und Weise zur Verfügung gestellt werden.

Gemäß einem weiteren Aspekt der Erfindung ist die Ansteuerungsschaltung ausgebildet und eingerichtet, derjenigen der drei Halbbrücken, welche zusätzlich den einphasigen Motor ansteuert, derart zu betreiben, dass der Strom dieser Halbbrücke dem erfassten Strom des entsprechenden Messwiderstands abzüglich des erfassten Stroms des Messwiderstands der vierten Halbbrücke entspricht. Hierdurch kann berücksichtigt bzw. korrigiert werden, dass der von derjenigen der drei Halbbrücken, welche zusätzlich den einphasigen Motor ansteuert, gelieferte Strom Anteile beider Motoren enthält.

Gemäß einem weiteren Aspekt der Erfindung sind die drei Phasen des dreiphasigen Motors mit einem Sternpunkt verbunden, wobei der einphasige Motor zwischen der vierten Halbbrücke und dem Sternpunkt des dreiphasigen Motors angeordnet ist. Der Vorteil hiervon ist, dass beide Motoren ohne Einschränkungen betrieben werden können. Für den dreiphasigen steht die gesamte Zwischenkreisspannung ohne Einschränkungen zur Verfügung. Der einphasige Motor kann mit höherer Spannung und geringerem Strom ausgelegt werden, was in der Umsetzung (Kostenaufwand) vorteilhaft sein kann.

Gemäß einem weiteren Aspekt der Erfindung ist der dreiphasige Motor ein dreiphasiger Wechselstrommotor, vorzugsweise ein dreiphasiger Synchronmotor. Dies kann die Umsetzung des Antriebssystems mit derartigen Motoren ermöglichen.

Gemäß einem weiteren Aspekt der Erfindung ist der einphasige Motor ein einphasiger Wechselstrommotor, vorzugsweise ein einphasiger Synchronmotor. Dies kann die Umsetzung des Antriebssystems mit derartigen Motoren ermöglichen.

Die vorliegende Erfindung betrifft auch ein Haushaltsgerät, vorzugsweise eine Waschmaschine oder einen Geschirrspüler, mit wenigstens einem Antriebssystem wie zuvor beschrieben. Das Haushaltsgerät kann insbesondere eine Waschmaschine mit dem dreiphasigen Motor als Trommelantrieb und mit dem einphasigen Motor als Ablaufpumpe, ein Geschirrspüler mit dem dreiphasigen Motor als Umwälzpumpe und mit dem einphasigen Motor als Ablaufpumpe, ein Staubsauger bzw. ein Saugroboter mit dem dreiphasigen Motor als Gebläsemotor und mit dem einphasigen Motor als Elektrobürste oder ein Trockner mit dem dreiphasigen Motor als Gebläse oder als Trommelantrieb und mit dem einphasigen Motor als Ablaufpumpe sein. Das erfindungsgemäße Antriebssystem kann jedoch auch auf vollkommen andere Produkte anderer Branchen angewendet werden. Hierdurch können die Eigenschaften und die Vorteile eines erfindungsgemäßen Antriebssystems umgesetzt und genutzt werden.

Mehrere Ausführungsbeispiele der Erfindung sind in den Zeichnungen rein schematisch dargestellt und werden nachfolgend näher beschrieben. Es zeigt

Figur 1    ein Schaltungsbild eines Antriebssystems gemäß dem Stand der Technik mit einem dreiphasigen Motor und mit einem einphasigen Motor an jeweils einem Umrichter;

Figur 2    ein Schaltungsbild eines erfindungsgemäßen Antriebssystems gemäß eines ersten Ausführungsbeispiels mit dem dreiphasigen Motor und mit dem einphasigen Motor an einer gemeinsamen Halbbrücke;

Figur 3    einen zeitlichen Verlauf der Spannung der vier Halbbrückenausgänge des Schaltungsbilds der Figur 2;

Figur 4    einen zeitlichen Verlauf der entsprechenden berechneten Sinusverläufe der Spannung an den Motoren des Schaltungsbilds der Figur 2;

Figur 5    ein Schaltungsbild eines erfindungsgemäßen Antriebssystems gemäß eines zweiten Ausführungsbeispiels mit dem dreiphasigen Motor und mit dem einphasigen Motor an einer gemeinsamen Halbbrücke;

Figur 6    einen zeitlichen Verlauf der Spannungen der vier Halbbrückenausgänge des Schaltungsbilds der Figur 5; und

Figur 7    einen zeitlichen Verlauf der entsprechenden berechneten Sinusverläufe der Spannungen an den Motoren des Schaltungsbilds der Figur 5.

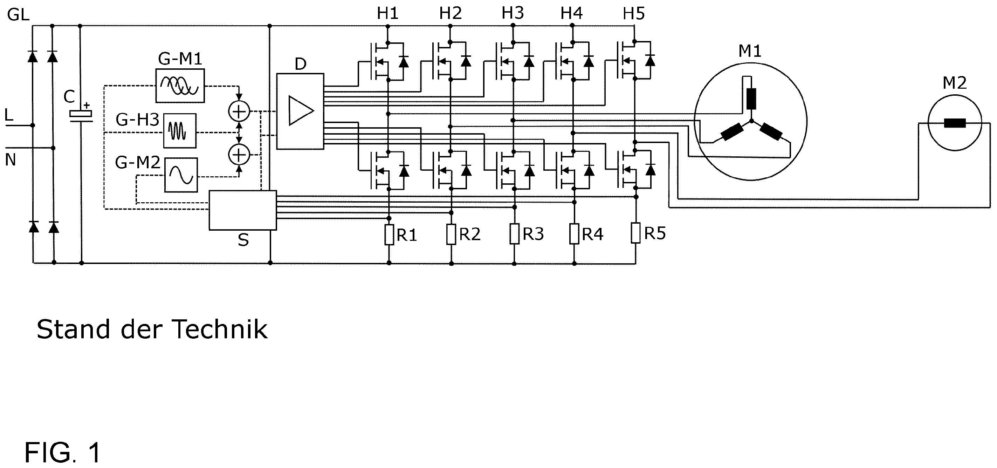

Figur 1 zeigt ein Schaltungsbild eines Antriebssystems gemäß dem Stand der Technik mit einem dreiphasigen Motor M1 und mit einem einphasigen Motor M2 an jeweils einem Umrichter.

An einem Spannungseingang L, N wird eine Wechselspannung von 230V dem Antriebssystem zugeführt. Die Wechselspannung des Spannungseingangs L, N wird über einen Gleichrichter GL in eine Gleichspannung als Zwischenkreisspannung gewandelt und dann mittels eines Glättungskondensators C geglättet. Die geglättete Zwischenkreisspannung speist einen ersten Umrichter in Form einer ersten Drehstrombrücke mit drei Halbbrücken H1-H3 mit jeweils einem Paar von Leistungshalbleitern (nicht bezeichnet), welche über einen gemeinsamen Treiber D betrieben bzw. gesteuert werden und jeweils einen Messwiderstand R1-R3 in Form eines Shunt R1-R3 aufweisen. Der Treiber D wird von einer Steuerungseinheit S gesteuert. Der Treiber D steuert jeweils die beiden Leistungshalbleiter pro Halbbrücke H1-H3. Die erste Drehstrombrücke bzw. deren Halbbrücken H1-H3 können somit eine erste Phase U, eine zweite Phase V und eine dritte Phase W erzeugen und hiermit einen dreiphasigen Motor M1 speisen bzw. betreiben.

Dies gilt entsprechend für einen einphasigen Motor M2, für welchen ein zweiter Umrichter in Form einer zweiten Drehstrombrücke als zwei weitere Halbbrücken H4-H5 parallel zu den drei Halbbrücken H1-H3 des ersten Umrichters vorgesehen ist. Die zwei weiteren Halbbrücken H4-H5 werden ebenfalls vom gemeinsamen Treiber D betrieben bzw. gesteuert und weisen jeweils ebenfalls einen Messwiderstand R4-R5 in Form eines Shunt R4-R5 auf. Zum Ansteuern bzw. zum Betreiben der insgesamt fünf Halbbrücken H1-H5 weist die Steuerungseinheit S einen dreiphasigen Sinuswellengenerator G-M1 des dreiphasigen Motors M1, einen Sinuswellengenerator G-M2 des einphasigen Motors M2 sowie einen H3-Generator G-H3 auf. Hieraus ergibt sich eine Ansteuerungsschaltung gemäß des Schaltungsbildes der Figur 1.

Nach dem Stand der Technik, siehe Figur 1, werden die zwei beschriebenen Motoren M1, M2 somit von einer gemeinsamen Ansteuerungsschaltung angesteuert, aber getrennt voneinander, indem jeder einzelne Motoranschluss an einer der Inverter-Halbbrücken H1-H5 angeschlossen wird. Der dreiphasige Motor M1 hat drei Anschlüsse und der zweiphasige Motor M2 hat zwei Anschlüsse, so dass insgesamt fünf Halbbrücken H1-H5 benötigt werden, siehe Figur 1.

Beide Umrichter, d.h. sowohl der aus den drei linken Halbbrücken H1-H3 bestehende erste Umrichter für den dreiphasigen Motor M1 als auch der aus den zwei rechten Halbbrücken H4-H5 bestehende zweite Umrichter für den einphasigen Motor M2, werden aus dem gemeinsamen Gleichspannungs-Zwischenkreis versorgt. Die drei linken Halbbrücken H1-H3 zum Betrieb des dreiphasigen Motors M1 werden mit per Pulsweitenmodulation erzeugten Sinusspannungen versorgt, die zueinander um 120° phasenverschoben sind. Die sich einstellenden Phasenströme werden über die Messwiderstände R1-R3 gemessen und an die Steuerungseinheit S zurückgeführt. Für eine maximale Ausnutzung der Zwischenkreisspannung wird zusätzlich auf alle drei Phasen eine Sinusspannung mit 3-facher Drehfeldfrequenz mit einer geeigneten Amplitude aufaddiert (generiert durch den H3-Generator G-H3).

Zur Reduzierung des Schaltungsaufwands gegenüber dem bekannten Antriebssystem gemäß dem Stand der Technik der Figur 1 werden im Folgenden die Ausführungsbeispiele zweier erfindungsgemäßer Schaltungen sowie die dazu benötigten Ansteuerprinzipien erläutert sowie in den entsprechenden Figuren dargestellt.

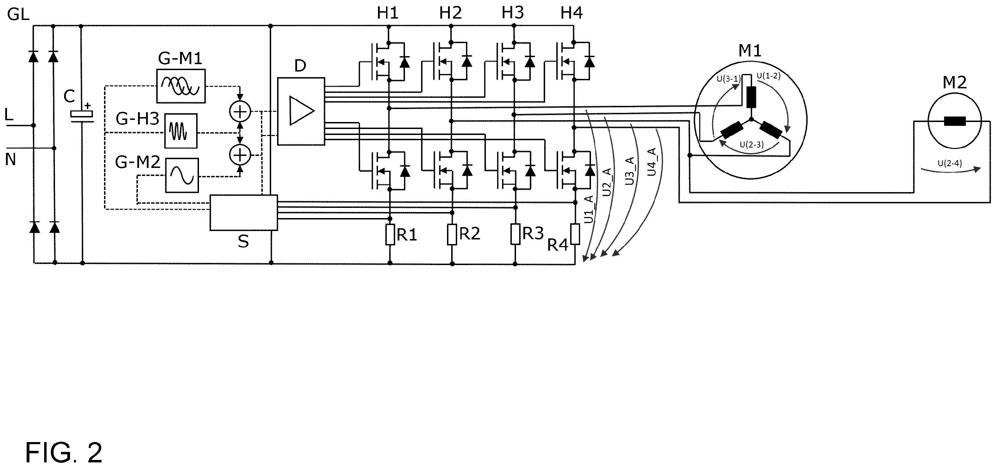

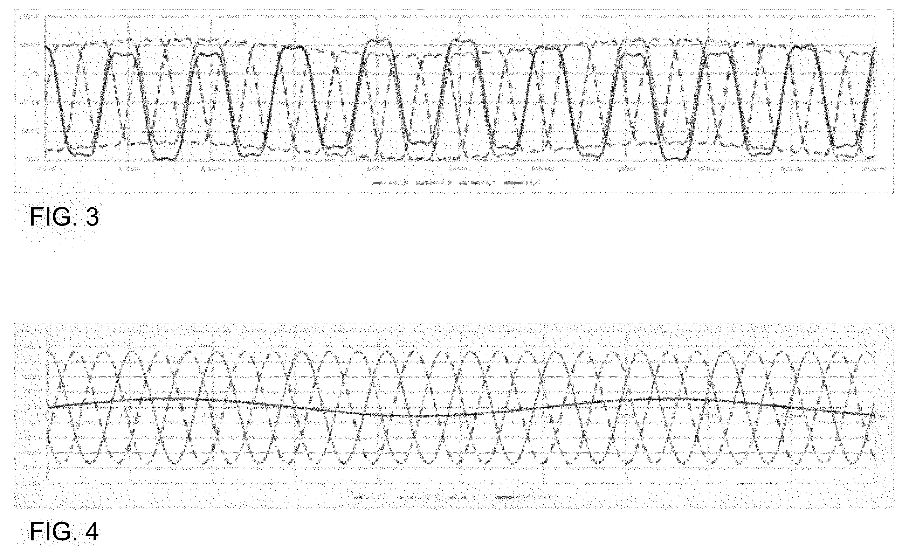

Figur 2 zeigt ein Schaltungsbild eines erfindungsgemäßen Antriebssystems gemäß eines ersten Ausführungsbeispiels mit dem dreiphasigen Motor M1 und mit dem einphasigen Motor M2 an einer gemeinsamen Halbbrücke H4. Figur 3 zeigt einen zeitlichen Verlauf der vier Halbbrückenausgänge des Schaltungsbilds der Figur 2. Figur 4 zeigt einen zeitlichen Verlauf der entsprechenden berechneten Sinusverläufe des Schaltungsbilds der Figur 2 an den beiden Motoren M1, M2.

Im Unterschied zum Stand der Technik wird hier der einphasige Motor M2 zwischen einer beliebigen Halbbrücke des ersten Umrichters des dreiphasigen Motors M1 - im betrachteten Ausführungsbeispiel an der zweiten Halbbrücke H2 - und an einer zusätzlichen vierten Halbbrücke H4 angeschlossen. Im Unterschied zum Stand der Technik wird hier somit auf die weitere fünfte Halbbrücke H5 verzichtet und dafür eine Halbbrücke des Motors M1 - hier die zweite Halbbrücke H2 - für beide Motoren M1, M2 gleichzeitig genutzt.

Zur Ansteuerung der beiden Motoren M1, M2 seitens der Steuerungseinheit S bzw. seitens des gemeinsamen Treibers D wird die Spannung des einphasigen Motors M2 auf die dritte Phase W des dreiphasigen Motors M1 mit halber Amplitude aufaddiert. Die vierte Phase des einphasigen Motors M2 wird entsprechend der zweiten Phase V des dreiphasigen Motors M1 berechnet, jedoch mit Subtraktion der halben Spannung des einphasigen Motors M2, so dass in der Differenz mit der Spannung der zweiten Phase V des dreiphasigen Motors M1 die Motorspannung für den einphasigen Motor M2 zur Verfügung steht:

$$U1\_A(t) = U\_ + U\_M1\curlywedge \cdot \sin(\omega\_M1 \cdot t) + U\_3H \cdot \sin(3 \cdot \omega\_M1 \cdot t) + U\_M2 / 2 \cdot \sin(\omega\_M2 \cdot t)$$

$$U2\_A(t) = U\_ + U\_M1\curlywedge \cdot \sin(\omega\_M1 \cdot t + 120°) + U\_3H \cdot \sin(3 \cdot \omega\_M1 \cdot t) + U\_M2 / 2 \cdot \sin(\omega\_M2 \cdot t)$$

$$U3\_A(t) = U\_ + U\_M1\curlywedge \cdot \sin(\omega\_M1 \cdot t + 240°) + U\_3H \cdot \sin(3 \cdot \omega\_M1 \cdot t) + U\_M2 / 2 \cdot \sin(\omega\_M2 \cdot t)$$

$$U4\_A(t) = U\_ + U\_M1\curlywedge \cdot \sin(\omega\_M1 \cdot t + 120°) + U\_3H \cdot \sin(3 \cdot \omega\_M1 \cdot t) - U\_M2 / 2 \cdot \sin(\omega\_M2 \cdot t)$$

Es ergeben sich die gewünschten Dreieck-Spannungen zwischen den Motoranschlüssen am dreiphasigen Motor M1 als Überlagerung der um 120° phasenverschobenen Strangspannungen:

$$U(3\text{-}1)(t) = U3\_A(t) - U2\_A(t)$$
$$= U\_ + U\_M1^\curlywedge \cdot \sin(\omega\_M1 \cdot t + 240°) + U\_3H \cdot \sin(3 \cdot \omega\_M1 \cdot t) + U\_M2 / 2 \cdot \sin(\omega\_M2 \cdot t)$$
$$- U\_ - U\_M1^\curlywedge \cdot \sin(\omega\_M1 \cdot t) - U\_3H \cdot \sin(3 \cdot \omega\_M1 \cdot t) - U\_M2 / 2 \cdot \sin(\omega\_M2 \cdot t)$$
$$= U\_M1^\curlywedge \cdot \sin(\omega\_M1 \cdot t + 240°) - U\_M1^\curlywedge \cdot \sin(\omega\_M1 \cdot t)$$

$$U(1\text{-}2)(t) = U3\_A(t) - U2\_A(t)$$
$$= U\_ + U\_M1^\curlywedge \cdot \sin(\omega\_M1 \cdot t) + U\_3H \cdot \sin(3 \cdot \omega\_M1 \cdot t) + U\_M2 / 2 \cdot \sin(\omega\_M2 \cdot t)$$
$$- U\_ - U\_M1^\curlywedge \cdot \sin(\omega\_M1 \cdot t + 120°) - U\_3H \cdot \sin(3 \cdot \omega\_M1 \cdot t) - U\_M2 / 2 \cdot \sin(\omega\_M2 \cdot t)$$
$$= U\_M1^\curlywedge \cdot \sin(\omega\_M1 \cdot t) - U\_M1^\curlywedge \cdot \sin(\omega\_M1 \cdot t + 120°)$$

$$U(2\text{-}3)(t) = U2\_A(t) - U3\_A(t)$$
$$= U\_ + U\_M1^\curlywedge \cdot \sin(\omega\_M1 \cdot t + 120°) + U\_3H \cdot \sin(3 \cdot \omega\_M1 \cdot t) + U\_M2 / 2 \cdot \sin(\omega\_M2 \cdot t)$$
$$- U\_ - U\_M1^\curlywedge \cdot \sin(\omega\_M1 \cdot t + 240°) - U\_3H \cdot \sin(3 \cdot \omega\_M1 \cdot t) - U\_M2 / 2 \cdot \sin(\omega\_M2 \cdot t)$$
$$= U\_M1^\curlywedge \cdot \sin(\omega\_M1 \cdot t + 120°) - U\_M1^\curlywedge \cdot \sin(\omega\_M1 \cdot t + 240°)$$

Die Spannung am einphasigen Motor M2 ergibt sich aus der Differenz der Spannungen an den beiden angeschlossenen Halbbrücken H2, H4 als Ausgänge eines Umrichters:

$$U\_M2(t) = U(2\text{-}4)(t)$$
$$= U\_ + U\_M1^\curlywedge \cdot \sin(\omega\_M1 \cdot t + 120°) + U\_3H \cdot \sin(3 \cdot \omega\_M1 \cdot t) + U\_M2 / 2 \cdot \sin(\omega\_M2 \cdot t)$$
$$- U\_ - U\_M1^\curlywedge \cdot \sin(\omega\_M1 \cdot t + 120°) - U\_3H \cdot \sin(3 \cdot \omega\_M1 \cdot t) + U\_M2 / 2 \cdot \sin(\omega\_M2 \cdot t)$$
$$= U\_M2 \cdot \sin(\omega\_M2 \cdot t)$$

Am einphasigen Motor M2 kommt die gewünschte Spannung mit der gewünschten Frequenz an. Die Figur 3 zeigt beispielhaft die Spannungsverläufe an den Ausgängen der vier Halbbrücken H1-H4.

Daraus ergeben sich entsprechend den aufgeführten Berechnungen die Sinusverläufe an den beiden Motoren M1, M2 gemäß der Figur 4. Deutlich ist der Verlauf der Ansteuerung des einphasigen Motors M2 mit einer anderen Ansteuerfrequenz erkennbar sowie die drei zueinander um 120° verschobenen Phasenverläufe des dreiphasigen Motors M1.

Die berechneten Verläufe werden den Treiberstufen des Umrichters zur Verfügung gestellt. Während die beiden Motoren M1, M2 laufen, werden die Ströme über die Messwiderstände R1-R4 ermittelt und mittels etablierter Regelungsverfahren werden die Spannungshöhen und Phasenlagen seitens der Steuerungseinheit S laufend angepasst. Somit kann die Schaltungsanordnung mit üblichen Regelverfahren kombiniert werden. Dabei muss lediglich berücksichtigt werden, dass der von der zweiten Halbbrücke H2 gelieferte Strom Anteile beider Motoren M1, M2 enthält. Daher erfolgt hier eine Korrektur:

$$I\_2 = I(\text{Shunt } 2) - I(\text{Shunt } 4)$$

Nach der Korrektur liegt der tatsächliche Strangstrom des Strangs 2 von Motor M1 vor und dieser wird für die etablierten Regelverfahren verwendet.

Vorteilhaft ist bei dem Schaltungsaufbau gemäß des ersten Ausführungsbeispiels, dass für den einphasigen Motor M2 im Gleichstrom-Zwischenkreis nur der einfache Scheitelwert der Versorgungsspannung vorgehalten werden muss. Die übliche Überlagerung der dritten Oberschwingung zur Leistungssteigerung des dreiphasigen Motors M1 kann beibehalten werden. Es entsteht kein Spannungsverlust durch einen Koppelkondensator. Wenn die Spannung für den einphasigen Motor M2 entsprechend gering gewählt wird, ist die Beeinflussung bei der Auslegung gering.

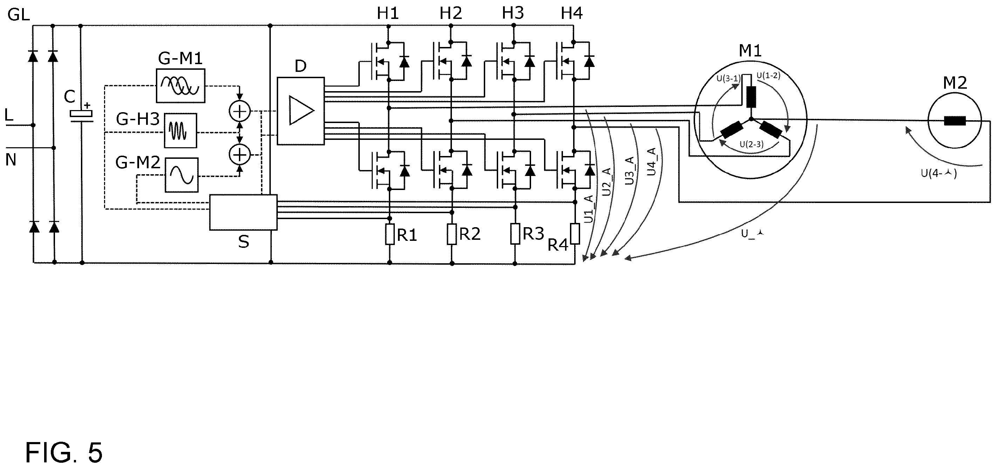

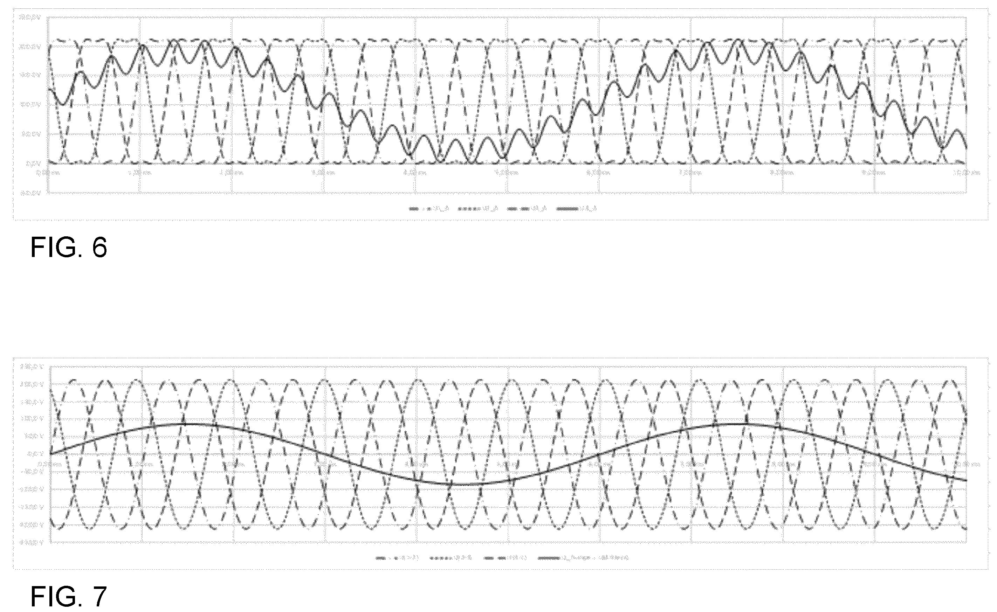

Figur 5 zeigt ein Schaltungsbild eines erfindungsgemäßen Antriebssystems gemäß eines zweiten Ausführungsbeispiels mit dem dreiphasigen Motor M1 und mit dem einphasigen Motor M2 an einer gemeinsamen Halbbrücke H4. Figur 6 zeigt einen zeitlichen Verlauf der vier Halbbrückenausgänge des Schaltungsbilds der Figur 5. Figur 7 zeigt einen zeitlichen Verlauf der entsprechenden berechneten Sinusverläufe des Schaltungsbilds der Figur 5 an den beiden Motoren M1, M2.

Hier ist der einphasige Motor M2 zwischen der vierten Halbbrücke H4 und dem Sternpunkt des dreiphasigen Motors M1 angeschlossen. Der Vorteil davon ist, dass beide Motoren M1, M2 ohne Einschränkungen betrieben werden können. Für den dreiphasigen Motor M1 als Hauptmotor steht die gesamte Zwischenkreisspannung ohne Einschränkungen zur Verfügung. Der kleinere einphasige Motor M2 kann mit höherer Spannung und geringerem Strom ausgelegt werden, was in der Umsetzung hinsichtlich des Kostenaufwands vorteilhaft ist.

Der dreiphasige Motor M1 wird wie bei dreiphasigen Umrichtern üblich angesteuert, d.h. mit der entsprechenden Frequenz, mit der entsprechenden Spannungsamplitude, mit den entsprechenden Phasenlagen sowie mit der entsprechenden Überlagerung der dritten Oberwelle. Für den einphasigen Motor M2 wird eine Wechselspannung mit der für die Drehzahl des dreiphasigen Motors M2 benötigten Frequenz sowie der benötigten Spannungsamplitude und Phasenlage generiert. Diese wird zusammen mit der dritten Oberwelle und dem Gleichanteil der Ansteuerung des einphasigen Motors M1 auf die vierte Halbbrücke H4 aufgeschaltet:

$$U1\_A(t) = U\_ + U\_M1_\curlywedge \cdot \sin(\omega\_M1 \cdot t) + U\_3H \cdot \sin(3 \cdot \omega\_M1 \cdot t)$$

$$U2\_A(t) = U\_ + U\_M1_\curlywedge \cdot \sin(\omega\_M1 \cdot t + 120°) + U\_3H \cdot \sin(3 \cdot \omega\_M1 \cdot t)$$

$$U3\_A(t) = U\_ + U\_M1_\curlywedge \cdot \sin(\omega\_M1 \cdot t + 240°) + U\_3H \cdot \sin(3 \cdot \omega\_M1 \cdot t)$$

$$U4\_A(t) = U\_ + U\_3H \cdot \sin(3 \cdot \omega\_M1 \cdot t) + U\_M2 \cdot \sin(\omega\_M2 \cdot t)$$

Es ergeben sich die gewünschten Dreieck-Spannungen zwischen den Motoranschlüssen am dreiphasigen Motor M1 als Überlagerung der um 120° phasenverschobenen Strangspannungen:

$$\begin{aligned} U(3\text{-}1)(t) &= U3\_A(t) - U2\_A(t) \\ &= U\_ + U\_M1_\curlywedge \cdot \sin(\omega\_M1 \cdot t+240°) + U\_3H \cdot \sin(3 \cdot \omega\_M1 \cdot t) \\ &\quad - U\_ - U\_M1_\curlywedge \cdot \sin(\omega\_M1 \cdot t) - U\_3H \cdot \sin(3 \cdot \omega\_M1 \cdot t) \\ &= U\_M1_\curlywedge \cdot \sin(\omega\_M1 \cdot t+240°) - U\_M1_\curlywedge \cdot \sin(\omega\_M1 \cdot t) \end{aligned}$$

$$\begin{aligned} U(1\text{-}2)(t) &= U3\_A(t) - U2\_A(t) \\ &= U\_ + U\_M1_\curlywedge \cdot \sin(\omega\_M1 \cdot t) + U\_3H \cdot \sin(3 \cdot \omega\_M1 \cdot t) \\ &\quad - U\_ - U\_M1_\curlywedge \cdot \sin(\omega\_M1 \cdot t+120°) - U\_3H \cdot \sin(3 \cdot \omega\_M1 \cdot t) \\ &= U\_M1_\curlywedge \cdot \sin(\omega\_M1 \cdot t) - U\_M1_\curlywedge \cdot \sin(\omega\_M1 \cdot t+120°) \end{aligned}$$

$$\begin{aligned} U(2\text{-}3)(t) &= U2\_A(t) - U3\_A(t) \\ &= U\_ + U\_M1_\curlywedge \cdot \sin(\omega\_M1 \cdot t+120°) + U\_3H \cdot \sin(3 \cdot \omega\_M1 \cdot t) \\ &\quad - U\_ - U\_M1_\curlywedge \cdot \sin(\omega\_M1 \cdot t+240°) - U\_3H \cdot \sin(3 \cdot \omega\_M1 \cdot t) \\ &= U\_M1_\curlywedge \cdot \sin(\omega\_M1 \cdot t+120°) - U\_M1_\curlywedge \cdot \sin(\omega\_M1 \cdot t+240°) \end{aligned}$$

Die Spannung im Sternpunkt ergibt sich aus den drei Spannungen, die an die drei Phasen des dreiphasigen Motors M1 angelegt werden, wobei sich die drei um 120° phasenverschobenen Strangspannungen aufheben. Es bleiben der an allen drei Phasen liegende Gleichanteil sowie die an allen Phasen liegende dritte Oberwelle:

$$U\_{\curlywedge} = U\_ + U\_3H \cdot \sin(3 \cdot \omega\_M1 \cdot t)$$

Am einphasigen Motor M2 liegt die gewünschte Spannung an:

$$U(4-\curlywedge)(t) = U4\_A(t) - U\_\curlywedge(t)$$
$$= U\_ + U\_3H \cdot \sin(3 \cdot \omega\_M1 \cdot t) + U\_M2 \cdot \sin(\omega\_M2 \cdot t) - U\_ - U\_3H \cdot \sin(3 \cdot \omega\_M1 \cdot t)$$
$$= U\_M2 \cdot \sin(\omega\_M2 \cdot t)$$

Die Darstellung der Figur 6 zeigt die Ausgangsspannungen der vier Halbbrücken H1-H4. Die Halbbrücken H1-H3 liefern die Spannungen für den dreiphasigen Motor M1 inkl. der Überlagerung der dritten Oberwelle und des Gleichanteils. Der Ausgang der vierten Halbbrücke H4 liefert die Spannung für den einphasigen Motor M2 inkl. der Überlagerung der dritten Oberwelle des dreiphasigen Motors M1, da diese am Sternpunkt auftaucht, sowie einer Überlagerung des Gleichanteils.

Die Spannungen an den beiden Motoren M1, M2, die sich aus den o.a. Berechnungen ergeben, sind der Figur 7 zu entnehmen. Am dreiphasigen Motor M1 kommt die sinusförmige dreiphasige Spannung mit 120° Phasenverschiebung und der Drehfrequenz des dreiphasigen Motors M1 an. Am einphasigen Motor M2 kommt die sinusförmige einphasige Spannung mit der Drehfrequenz des einphasigen Motors M2 an.

Über den Shunt R4 der vierten Halbbrücke H4 wird der Strom des einphasigen Motors M2 ermittelt und an die Steuerungseinheit S gegeben. Dort erfolgen etablierte Regelverfahren zur Anpassung von Spannung und Phase, Drehrichtungsermittlung und ggf. Neuanlauf für den einphasigen Motor M2.

Für den dreiphasigen Motor M1 liefern die erste bis dritte Halbbrücke H1-H3 die Strangströme. Diese sind von Stromanteilen des einphasigen Motors M2 überlagert. Daher werden sowohl die gemessenen Strangströme als auch mit dem Strom durch den einphasigen Motor M2 korrigierte Größen berücksichtigt und der dreiphasige Motor M1 wird ebenfalls mit etablierten Verfahren betrieben und geregelt.

Vorteilhaft ist bei dem Schaltungsaufbau gemäß des zweiten Ausführungsbeispiels, dass es hier überhaupt keinen Spannungsverlust beim dreiphasigen Motor M1 gibt und der einphasige Motor M2 mit höherer Spannung und entsprechend geringem Strom betrieben werden kann. Dadurch können Bauelemente mit geringerer Strombelastbarkeit und geringere Leitungsquerschnitte eingesetzt werden.

Vorteilhaft ist in beiden Fällen, dass lediglich eine vergleichsweise einfache bzw. einfachste Schaltung mit lediglich einer Halbbrücke H4 statt zwei Halbbrücken H4-H5 für den einphasigen Motor M2 verwendet werden muss. Vorteilhaft ist auch die flexible Drehzahlsteuerung, so dass die Drehzahlen für beide Motoren M1, M2 unabhängig steuerbar sind. Vorteilhaft ist des Weiteren die Drehzahlregelung für den einphasigen Motor M2, so dass ein sanfter Anlauf des einphasigen Motors M2 ermöglicht wird. Auch kann ein bedarfsgerechter Betrieb des einphasigen Motors M2 erfolgen, z.B. bei Verwendung bei einer Ablaufpumpe, welche lediglich so viel und so schnell wie nötig fördert, wodurch eine Energieeinsparung erreicht sowie weniger Geräusche verursacht werden können. Ferner kann je nach verwendetem Motor als einphasigen Motor M2 aus den Umrichterdaten die Drehrichtung erkennbar sein.

Bei einem speziellen einphasigen Motor M2 ist auch ein Anlauf in Vorzugsrichtung denkbar, d.h. die Pumpe fördert besser bei Auslegung auf die Vorzugsrichtung als bei einer drehrichtungsunabhängigen Auslegung, so dass die definierte Drehrichtung für Positionierantriebe genutzt werden kann.

**Bezugszeichenliste (Bestandteil der Beschreibung)**

C    Glättungskondensator
D    Treiber
GL    Gleichrichter
G-M1    dreiphasiger Sinuswellengenerator des dreiphasigen Motors M1
G-M2    Sinuswellengenerator des einphasigen Motors M2
G-H3    H3-Generator
H1-H5    Halbbrücken
I_2    zweiter Strangstrom durch den dreiphasigen Motor M1 (an der zweiten Halbbrücke HL2 angeschlossener Strang des dreiphasigen Motors M1)
I(Shunt 2)    am Messwiderstand R2 der zweiter Halbbrücke ermittelter Strom
I(Shunt 4)    am Messwiderstand R4 der vierter Halbbrücke ermittelter Strom
L, N    Spannungseingang
M1    dreiphasiger Motor
M2    einphasiger Motor
R1-R5    Messwiderstände; Shunts
S    Steuerungseinheit; Rechner
U    erste Phase
V    zweite Phase
W    dritte Phase

U1_A(t)-U4_A(t)    Spannungen des Umrichterausgangs

U_    Gleichspannungsanteil am Umrichterausgang

U_M1 ⅄    Amplitude der Stern- oder Strangspannung des Motors M1

U_3H    Amplitude der addierten dritten Oberwelle zur Leistungssteigerung

U(1-2)    (Strang-)Spannung zwischen erster Halbbrücke H1 und zweiter Halbbrücke H2

U(2-3)    (Strang-)Spannung zwischen zweiter Halbbrücke H2 und dritter Halbbrücke H3

U(3-1)    (Strang-)Spannung zwischen dritter Halbbrücke H3 und erster Halbbrücke H1

U(2-4)    (Strang-)Spannung zwischen zweiter Halbbrücke H2 und vierter Halbbrücke H4

ω _M1    Winkelgeschwindigkeit des dreiphasigen Motors M1

ω _M2    Winkelgeschwindigkeit des einphasigen Motors M2

t    Zeit

## Patentansprüche

**1.**  Antriebssystem

mit einem dreiphasigen Motor (M1),
mit einem einphasigen Motor (M2) und
mit einer Ansteuerungsschaltung

mit drei Halbbrücken (H1-H3), welche ausgebildet und eingerichtet sind, den dreiphasigen Motor (M1) anzusteuern,
mit drei Messwiderständen (R1-R3), vorzugsweise Shunts (R1-R3), welche ausgebildet und eingerichtet sind, die Ströme der drei Halbbrücken (H1-H3) zu erfassen,
mit einer vierten Halbbrücke (H4), welche ausgebildet und eingerichtet sind, den einphasigen Motor (M2) anzusteuern,
mit einem vierten Messwiderstand (R4), vorzugsweise Shunt (R4), welcher ausgebildet und eingerichtet sind, den Strom der vierten Halbbrücke (H4) zu erfassen,
wobei eine der drei Halbbrücken (H1-H3) zum Ansteuern des dreiphasigen Motors (M1) ferner zum Ansteuern des einphasigen Motors (M2) ausgebildet und eingerichtet ist, und
mit einer Steuerungseinheit (S), welche ausgebildet und eingerichtet ist, die vier Halbbrücken (H1-H4) zu betreiben.

**2.**  Antriebssystem nach Anspruch 1,
wobei die Ansteuerungsschaltung ausgebildet und eingerichtet ist, auf die drei Phasen (U, V, W) des dreiphasigen Motors (M1) die halbe Amplitude der Spannung des einphasigen Motors (M2) aufzuaddieren.

**3.**  Antriebssystem nach Anspruch 1 oder 2,
wobei die Ansteuerungsschaltung ausgebildet und eingerichtet ist, die vierte Halbbrücke (H4) derart zu betreiben, so dass die Ausgangsspannung der vierten Halbbrücke (H4) der Ausgangsspannung derjenigen der drei Halbbrücken (H1-H3) entspricht, welche zusätzlich den einphasigen Motor (M2) ansteuert, abzüglich der halben Spannung des einphasigen Motors (M2).

**4.**  Antriebssystem nach einem der vorangehenden Ansprüche,
wobei die Ansteuerungsschaltung ausgebildet und eingerichtet ist, derjenigen der drei Halbbrücken (H1-H3), welche zusätzlich den einphasigen Motor (M2) ansteuert, derart zu betreiben, dass der Strom dieser Halbbrücke (H1-H3) dem erfassten Strom des entsprechenden Messwiderstands (R1-R3) abzüglich des erfassten Stroms des Messwiderstands (R4) der vierten Halbbrücke (H4) entspricht.

**5.**  Antriebssystem nach Anspruch 1,

wobei die drei Phasen (U, V, W) des dreiphasigen Motors (M1) mit einem Sternpunkt verbunden sind,
wobei der einphasige Motor (M2) zwischen der vierten Halbbrücke (H4) und dem Sternpunkt des dreiphasigen Motors (M1) angeordnet ist.

**6.**  Antriebssystem nach einem der vorangehenden Ansprüche,
wobei der dreiphasige Motor (M1) ein dreiphasiger Wechselstrommotor (M1), vorzugsweise ein dreiphasiger Synchronmotoren (M1), ist.

7. Antriebssystem nach einem der vorangehenden Ansprüche,
   wobei der einphasige Motor (M2) ein einphasiger Wechselstrommotor (M2), vorzugsweise ein einphasiger Synchronmotoren (M2), ist.

8. Haushaltsgerät, vorzugsweise Waschmaschine oder Geschirrspüler,
   mit wenigstens einem Antriebssystem nach einem der vorangehenden Ansprüche.

Stand der Technik

FIG. 1

FIG. 2

FIG. 3

FIG. 4

FIG. 5

FIG. 6

FIG. 7

Europäisches
Patentamt

European
Patent Office

Office européen
des brevets

**EUROPÄISCHER RECHERCHENBERICHT**

**Nummer der Anmeldung**

EP 25 19 2311

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/135606 A1 (KWON SUNKU [KR] ET AL) 6. Mai 2021 (2021-05-06) | 1,5-8 | INV. H02P5/74 |
| Y | * Absatz [0123]; Abbildung 5 * | 1,3,4 | H02P6/04 |
| | * Absatz [0139]; Abbildung 7 * | | |
| | * Absatz [0166]; Abbildung 5 * | | |
| | * Absatz [0153] * | | |
| | * Absatz [0086]; Abbildung 5 * | | |
| | * Absatz [0230]; Abbildung 10 * | | |
| | * Absatz [0235] * | | |
| | * Absatz [0226]; Abbildung 8 * | | |
| | * Abbildungen 4C, 4E * | | |
| | ----- | | |
| Y | DE 10 2011 053791 A1 (EBM PAPST MULFINGEN GMBH & CO [DE]) 21. März 2013 (2013-03-21) * Absatz [0031]; Abbildung 1 * ----- | 1,3,4 | |
| Y | US 2018/244171 A1 (SENOL MURAT [DE] ET AL) 30. August 2018 (2018-08-30) * Absatz [0031]; Abbildung 1 * ----- | 1 | |
| A | Nxp: "Integrated Quad Half H-Bridge with Power Supply, Embedded MCU, and LIN Serial Communication", , April 2012 (2012-04), Seiten 1-49, XP093257341, Gefunden im Internet: URL:https://www.nxp.com/docs/en/data-sheet /MM908E625.pdf [gefunden am 2025-03-07] * Seite 32, linke Spalte, Absatz zweiter * ----- | 1-8 | |

| | | |
|---|---|---|
| | | RECHERCHIERTE SACHGEBIETE (IPC) |
| | | H02P |

-/--

Der vorliegende Recherchenbericht wurde für alle Patentansprüche erstellt

| Recherchenort | Abschlußdatum der Recherche | Prüfer |
|---|---|---|
| München | 9. Januar 2026 | Fligl, Stanislav |

Europäisches
Patentamt

European
Patent Office

Office européen
des brevets

# EUROPÄISCHER RECHERCHENBERICHT

**Nummer der Anmeldung**

EP 25 19 2311

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Texas Instruments: "DRV84x2 Dual Full-Bridge PWM Motor Driver", , Dezember 2014 (2014-12), Seiten 1-43, XP093257342, Gefunden im Internet: URL:https://static.chipdip.ru/lib/869/DOC0 03869346.pdf [gefunden am 2025-03-07] * Seite 15, letzter Absatz; Abbildung 6 * ----- | 1-8 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 9. Januar 2026 | Fligl, Stanislav |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 19 2311

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-01-2026

| Im Recherchenbericht angeführtes Patentdokument | Datum der Veröffentlichung | Mitglied(er) der Patentfamilie | Datum der Veröffentlichung |
|---|---|---|---|
| US 2021135606 A1 | 06-05-2021 | AU 2020264301 A1 | 20-05-2021 |
| | | CN 112787552 A | 11-05-2021 |
| | | EP 3817217 A1 | 05-05-2021 |
| | | KR 20210053687 A | 12-05-2021 |
| | | US 2021135606 A1 | 06-05-2021 |
| DE 102011053791 A1 | 21-03-2013 | DE 102011053791 A1 | 21-03-2013 |
| | | DE 202011111039 U1 | 11-10-2018 |
| US 2018244171 A1 | 30-08-2018 | DE 102015114640 A1 | 02-03-2017 |
| | | EP 3344489 A1 | 11-07-2018 |
| | | US 2018244171 A1 | 30-08-2018 |
| | | WO 2017036457 A1 | 09-03-2017 |

EPO FORM P0461

Für nähere Einzelheiten zu diesem Anhang : siehe Amtsblatt des Europäischen Patentamts, Nr.12/82